# EUROPÄISCHE PATENTSCHRIFT

(11) **EP 3 681 345 B1**
(45) Veröffentlichungstag und Bekanntmachung des Hinweises auf die Patenterteilung: **09.10.2024**
(21) Anmeldenummer: 18768858.5
(22) Anmeldetag: 10.09.2018
(51) Int. Cl.: A47B 9/00, A61G 13/04, F16M 11/04, F16M 11/06, F16M 11/18, F16M 11/20, F02F 1/24, A47B 23/04

(54) **COMPUTERMÖBEL**
PIECE OF COMPUTER FURNITURE
MEUBLE D'ORDINATEUR

(30) Priorität: 12.09.2017 AT 5016917 U
(43) Veröffentlichungstag der Anmeldung: 22.07.2020
(73) Patentinhaber: Bayr, Markus, 1200 Wien (AT)
(72) Erfinder: Bayr, Markus, 1200 Wien (AT)
(74) Vertreter: Puchberger & Partner Patentanwälte
(86) Internationale Anmeldenummer: PCT/EP2018/074301
(87) Internationale Veröffentlichungsnummer: WO 2019/052942

(56) Entgegenhaltungen:
- WO-A1-2009/138824
- WO-A2-03/063647
- US-A- 689 758
- US-A1- 2007 145 219
- US-A1- 2007 164 176

## Beschreibung

Die Erfindung betrifft ein Computermöbel gemäß den Merkmalen des unabhängigen Anspruchs.

Computermöbel, insbesondere Computermöbel, die dazu eingerichtet sind, Peripheriegeräte für Computerspiele zu halten, sind in unterschiedlichen Ausführungsformen bekannt und publiziert. Diese meist spezialisierten Computermöbel sind auf eine bestimmte Art und Anordnung der Peripheriegeräte abgestimmt. Für Autorennsimulationen gibt es beispielsweise spezielle Halterungen zur Bildung von Rennsimulatoren, die zur Aufnahme eines Lenkrads und von Bedienpedalen eingerichtet sind. Für andere Computerspiele, die beispielsweise ausschließlich über eine Tastatur und eine Computermaus bedient werden, können auch herkömmliche Tische verwendet werden. Auch zur Halterung von anderen elektronischen Geräten sind Vorrichtungen unterschiedlicher Art bekannt, die jedoch nicht als Computermöbel im engeren Sinne anzusehen sind. Beispielsweise beschreibt die WO 2009/138824 A1 eine verstellbare Halterung für Flachbildschirme.

Nun gibt es am Markt jedoch eine Nachfrage nach Computermöbeln, die flexibel an unterschiedliche Konfigurationen anpassbar sind. So besteht beispielsweise eine Nachfrage nach Computermöbeln, die sowohl von einem Sofa als auch von einem Sessel bedient werden können. Auch ein einfaches Umrüsten unterschiedlicher Peripheriegeräte sollte einfach möglich sein.

Für diese unterschiedlichen Konfigurationen ist es jedoch notwendig, dass das Computermöbel flexibel an die jeweilige Konfiguration anpassbar ist. Herkömmliche verstellbare Tische weisen meist nicht die notwendigen Freiheitsgrade für einen optimalen Gebrauch als Computermöbel auf. Darüber hinaus sind derartige verstellbare Tische oft nicht dazu geeignet, die beim Computerspielen entstehenden, hohen Kräfte aufzunehmen. Beispielsweise treten bei der Bedienung eines Lenkrades als Computereingabegerät verhältnismäßig hohe Kräfte und Momente auf.

Aufgabe der Erfindung ist es nun, die Nachteile des Standes der Technik zu überwinden und insbesondere ein Computermöbel zu schaffen, das flexibel an unterschiedliche Konfigurationen angepasst werden kann.

Die erfindungsgemäße Aufgabe wird insbesondere durch die Merkmale des unabhängigen Anspruchs gelöst.

Gegebenenfalls ist vorgesehen, dass das erste Gelenk eine im Wesentlichen horizontal verlaufende erste Schwenkachse zur Veränderung der Neigung des Hauptfußes gegenüber der Basis aufweist, und dass das zweite Gelenk eine im Wesentlichen horizontal verlaufende zweite Schwenkachse zur Veränderung der Neigung der Ablage gegenüber dem Hauptfuß aufweist.

Gegebenenfalls ist vorgesehen, dass die erste Schwenkachse und die zweite Schwenkachse im Wesentlichen parallel zueinander verlaufen und insbesondere im Wesentlichen parallel zu jener Abschlusskante der Ablage verlaufen, die dem Benutzer des Computermöbels im bestimmungsgemäßen Betrieb des Computerperipheriegeräts zugewandt ist.

Erfindungsgmäß ist vorgesehen, dass das Schwenklager zwischen der Ablage und dem zweiten Gelenk vorgesehen ist, sodass die Ablage in ihrer durch die Neigung des ersten und des zweiten Gelenks bestimmten Neigstellung verschwenkbar ist. Gegebenenfalls ist vorgesehen, dass der Hauptfuß in seiner Länge veränderbar ausgestaltet ist.

Erfindungemäß ist vorgesehen, dass das Computermöbel selbststehend ausgebildet ist.

Gegebenenfalls ist vorgesehen, dass die Basis, der Hauptfuß und die Ablage in ihrer Betriebsstellung C-förmig angeordnet sind.

Gegebenenfalls ist vorgesehen, dass der Fußraum in waagrechter Richtung nur von dem Hauptfuß begrenzt oder eingeschränkt ist.

Das Computermöbel ist bevorzugt dazu geeignet, seitlich und/oder von vorne ein Sitzmöbel zu umgreifen.

So weist das Computermöbel einen Fußraum auf, der in einer bevorzugten Betriebsstellung von oben durch die Ablage, von unten durch die Basis und einseitig von dem Hauptfuß begrenzt ist. Diese Anordnung der Ablage, des Hauptfußes und der Basis entspricht somit einer C-Form. Diese C-Form ermöglicht es, das Computermöbel beispielsweise seitlich derart im Bereich eines Sitzmöbels zu platzieren, dass die Basis unterhalb des Sitzmöbels angeordnet ist, und die Ablage beabstandet oberhalb des Sitzmöbels angeordnet ist. Der Hauptfuß verläuft beispielsweise seitlich neben dem Sitzmöbel. Die Ablage kragt seitlich von dem Hauptfuß aus, wodurch eine am Sitzmöbel befindliche Person das auf der Ablage befindliche Computerperipheriegerät bedienen kann. Diese Konfiguration weist somit eine C-Form in einer vertikal verlaufenden Ebene auf, die quer zur Sitzrichtung der Bedienperson und beispielsweise parallel zu einer Bildwiedergabefläche verläuft.

Darüber hinaus oder alternativ weist das Computermöbel in einer bevorzugten Betriebsstellung auch eine C-Form in einer zweiten Ebene auf. So erstreckt sich die Ablage Richtung Bedienperson. Auch die Basis erstreckt sich von dem Hauptfuß Richtung Bedienperson. Dadurch ist es möglich, die Basis beispielsweise von vorne unter ein Sitzmöbel zu schieben. Dabei ist es möglich, die Ablage oberhalb des Sitzmöbels, insbesondere beabstandet vom Sofa, anzuordnen. Dadurch ist es möglich, dass eine auf dem Sitzmöbel sitzende Bedienperson das auf der Ablage befindliche Computerperipheriegerät bedient. Hierdurch weist das Computermöbel eine C-Form in einer vertikalen Ebene auf, die entlang der Sitzrichtung und beispielsweise entlang der Blickrichtung der Bedienperson verläuft.

Es ist somit in einer bevorzugten Ausführungsform und Betriebsstellung des Computermöbels möglich, dass dieses ein Sitzmöbel seitlich und/oder von vorne umgreift. Dadurch kann die Ablage selbsttragend über unterschiedlichen Sitzmöbeln, wie beispielsweise über einem Sofa, einem Sessel oder einem Bett, angeordnet werden.

In allen exemplarischen Aufstellmöglichkeiten besteht eine Nachfrage danach, dass die Person einfach und ohne größere Umbauten den Sitzplatz verlassen kann. insbesondere weist hierzu das Computermöbel einen weiteren Freiheitsgrad auf. Dieser Freiheitsgrad ermöglicht es, die Ablage horizontal zu verschwenken. Dadurch kann die Person die Ablage wegschwenken und nach oben aufstehen, ohne beispielsweise die Lage der Basis oder die Platzierung des Computerperipheriegerätes auf der Ablage verändern zu müssen. Die Verschwenkung der Ablage geschieht hierbei bevorzugt über ein Schwenkgelenk. Dieses Schwenkgelenk umfasst bevorzugt eine vertikal verlaufende Schwenkachse. Insbesondere ist es durch die Ausgestaltung des Schwenkgelenks möglich, die Ablage in ihrer vorher definierten Stellung waagrecht zu verschwenken. Etwaige auf der Ablage abgelegte Gegenstände können somit auf der Ablage verbleiben, während diese verschwenkt wird.

In einer erfindungsgemäßen Ausführung der Erfindung ist vorgesehen, dass an dem auskragenden Ende der Ablage mindestens ein Hilfsfuß vorgesehen ist. Dieser Hilfsfuß ist bevorzugt klappbar oder entfernbar ausgeführt. Er dient der optionalen, zusätzlichen Abstützung der Ablage an ihrem auskragenden Ende.

Alternativ oder zusätzlich ist mindestens ein am Hauptfuß angreifender Hilfsfuß vorgesehen, der zur optionalen, zusätzlichen Abstützung des Hauptfußes am Boden eingerichtet ist. Gegebenenfalls ist vorgesehen, dass das erste Gelenk und/oder das zweite Gelenk jeweils zwei gegenüber einander verschwenkbare Teile umfassen, die über ein Betätigungselement starr miteinander verbunden werden können, um eine gewünschte Drehstellung wählen und fixieren zu können. Gegebenenfalls umfassen diese beiden Teile eine Verzahnung oder andere Formschlusselemente, sodass die Stabilität der Fixierung verbessert werden kann. Insbesondere können die beiden Teile eines Gelenks ähnlich einer Klauenkupplung wirken, die in ihrer fixierten Stellung formschlüssig miteinander in Wirkkontakt stehende Elemente aufweist. In ihrer geöffneten Stellung können die beiden Teile derart entlang der Drehachse voneinander entfernt werden, dass die formschlüssige Verbindung getrennt wird und insbesondere die Elemente voneinander beabstandet werden, sodass eine Verschwenkung des Gelenks und der beiden Teile des Gelenks möglich ist. Bevorzugt sind die Formschlusselemente in Richtung ihrer auskragenden Enden zugespitzt oder keilförmig ausgebildet, sodass die Bedienbarkeit verbessert ist.

Das Schwenkgelenk umfasst beispielsweise eine der Schwenkachse folgende Achse oder Welle. Diese kann beispielsweise starr mit dem Hauptfuß, mit dem zweiten Gelenk oder mit der Ablage verbunden sein. Ferner kann dieses Schwenkgelenk zwei Rotationslager umfassen, die sich um diese Welle bzw. Achse drehen können. Zur Ermöglichung der Aufnahme der durch die auskragende Ausgestaltung der Ablage auftretenden Momente, können diese beiden Lager entlang des Verlaufs der Schwenkachse beabstandet voneinander angeordnet sein. Bevorzugt ist vorgesehen, dass die Rotation dieser Rotationslagen gegenüber der Achse oder Welle, insbesondere der Freiheitsgrad des Schwenkgelenks und die Verschwenkbarkeit der Ablage, über ein Betätigungselement gesperrt werden kann. Beispielsweise kann dies über eine Verklemmung oder eine formschlüssige Fixierung des Gelenks bewirkt werden.

Bevorzugt ist vorgesehen, dass die Basis als Platte oder Träger ausgebildet ist, die oder der sich von jenem Bereich, in dem der Hauptfuß an der Basis angreift, Richtung Bedienperson und somit gegen die Sitzrichtung erstreckt. Darüber hinaus oder alternativ ist bevorzugt vorgesehen, dass sich die Basis von jenem Bereich, in dem der Hauptfuß an ihr angreift, seitlich unter den Fußraum, also quer zur Sitzrichtung, erstreckt. Bevorzugt ist vorgesehen, dass sich die Ablage in einer bevorzugten Betriebstellung oberhalb der Basis befindet. Insbesondere sind die Basis und die Ablage derart zueinander positioniert, dass der Schwerpunkt des Computermöbels innerhalb der Aufstandsfläche der Basis angeordnet ist, sodass die über die Ablage eingeleiteten Kräfte über die Basis in den Boden eingeleitet werden.

Das gesamte Computermöbel ist in allen Ausführungsformen selbststehend ausgebildet. Insbesondere ist das Computermöbel in all seinen möglichen Betriebsstellungen selbsttragend oder selbststehend ausgebildet.

In weiterer Folge wird die Erfindung anhand einer exemplarischen, nicht einschränkenden, Ausführungsform weiter beschrieben.
Fig. 1 zeigt eine erste Ansicht des Computermöbels in seiner bevorzugten Betriebsstellung.
Fig. 2 zeigt dasselbe Computermöbel wie Fig. 1, jedoch mit verschwenkter Ablage.
Fig. 3 zeigt eine weitere Ausführungsform eines Computermöbels.

Wenn nicht anders angegeben, so entsprechen die Bezugszeichen der Figuren folgenden Komponenten:
Basis 1, Fußraum 2, Ablage 3, Hauptfuß 4, erstes Gelenk 5, zweites Gelenk 6, Schwenkgelenk 7, erste Schwenkachse 8, zweite Schwenkachse 9, Schwenkachse (des Schwenkgelenks) 10, Abschlusskante 11, Sitzrichtung 12, Hilfsfuß 13, Antriebssystem 14, erster Linearantrieb 15, zweiter Linearantrieb 16, dritter Linearantrieb 17.

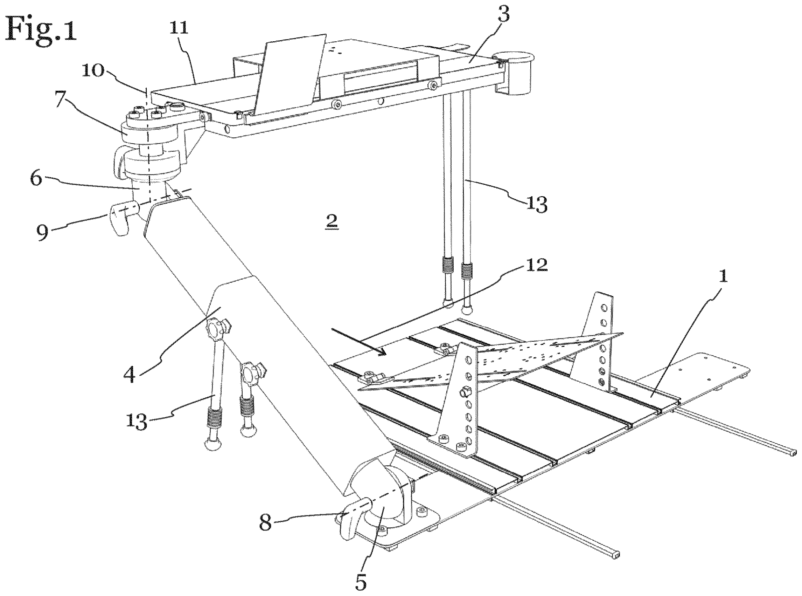

Fig. 1 zeigt eine Schrägansicht einer Ausführungsform eines erfindungsgemäßen Computermöbels. Das Computermöbel umfasst eine Basis 1, eine Ablage 3 und einen Hauptfuß 4, über den die Ablage 3 mit der Basis 1 verbunden oder gekoppelt ist. Zwischen der Basis 1 und der Ablage 3 ist ein Fußraum 2 vorgesehen, der zur Aufnahme der Beine der Bedienperson in einer bevorzugten Betriebsstellung des Computermöbels dient. Die Basis 1 ist bodenstehend ausgebildet oder zumindest zur Abstützung des Computermöbels am Boden ausgebildet, wobei die Basis 1 gegebenenfalls Justierfüße oder Auflagefüße umfasst. Der Hauptfuß 4 ist neigbar und insbesondere gegenüber dem Boden neigbar ausgebildet. Hierzu ist ein erstes Gelenk 5 vorgesehen, das eine Verschwenkung, insbesondere eine Neigung, des Hauptfußes 4 gegenüber der Basis 1, um eine erste Schwenkachse 8 ermöglicht. Das erste Gelenk 5 ist insbesondere derart ausgestaltet, dass der Hauptfuß 4 in einer gewünschten Neigstellung fixiert werden kann.

Ferner umfasst das Computermöbel ein zweites Gelenk 6. Dieses zweite Gelenk 6 ist dazu eingerichtet, die Ablage 3 um eine zweite Schwenkachse 9 gegenüber dem Hauptfuß 4 verschwenken zu können. Hierdurch kann die Neigung der Ablage 3 gegenüber dem Hauptfuß 4, aber insbesondere auch gegenüber der Basis 1 und dem Boden, gewählt und festgestellt werden. Ferner umfasst das Computermöbel ein Schwenkgelenk 7. Über dieses Schwenkgelenk 7 kann die Ablage 3 um eine Schwenkachse 10 geschwenkt werden. In der vorliegenden Ausführungsform verläuft diese Schwenkachse 10 im Wesentlichen vertikal, wodurch die Ablage 3 durch das Schwenkgelenk 7 im Wesentlichen horizontal verschwenkt werden kann. Die beiden Schwenkachsen 8, 9 verlaufen in der vorliegenden Ausführungsform im Wesentlichen horizontal, sodass die Neigung der Ablage 3 bzw. des Hauptfußes 4 gegenüber der Basis 1 oder dem Boden gewählt werden kann. Insbesondere ist es durch das Vorsehen der beiden Gelenke 5, 6 möglich, trotz einer Veränderung der Neigung des Hauptfußes 4 gegenüber der Basis 1 oder dem Boden, die Ablage 3 in einem bestimmten Winkel, insbesondere waagrecht, zu halten. In bevorzugter Weise verlaufen die erste Schwenkachse 8 und die zweite Schwenkachse 9 parallel zueinander. Bevorzugt sind alle Gelenke 5, 6, 7, insbesondere das erste Gelenk 5, das zweite Gelenk 6 und das Schwenkgelenk 7, feststellbar, sodass deren Freiheitsgrad gesperrt werden kann. Sind die Gelenke 5, 6, 7 festgestellt, so ist eine starre Halterung der Ablage 3 gebildet, deren Kraftfluss, ausgehend von der Ablage 3, über das Schwenkgelenk 7, weiter über das zweite Gelenk 6, weiter über den Hauptfuß 4, das erste Gelenk 5 und über die Basis 1 in den Boden geleitet wird.

Die Ablage 3 kragt, ausgehend von dem Hauptfuß 4, frei aus. An dem freien Ende oder im Bereich des freien Endes ist mindestens ein Hilfsfuß 13 vorgesehen. Dieser Hilfsfuß 13 ist bevorzugt klappbar oder entfernbar ausgeführt und dient insbesondere der Abstützung des freien Endes der Ablage 3. Ein ähnlicher entfernbarer oder wegklappbarer Hilfsfuß 13 ist alternativ oder zusätzlich zur zusätzlichen Abstützung des Hauptfußes 4 angeordnet. In der vorliegenden Ausführungsform ist der Hauptfuß 4 Richtung Bedienperson, also gegen die Sitzrichtung 12, geneigt. Jene Abschlusskante 11 der Ablage 3, die der Bedienperson zugewandt ist, ragt somit, ausgehend von der Basis 1, Richtung Bedienperson. Die Basis 1 selbst ragt bodennah Richtung Bedienperson. Insbesondere ragt die Basis 1 von jenem Bereich, in dem der Hauptfuß 4 angreift, entgegen der Sitzrichtung 12 Richtung Bedienperson. Dadurch ist eine im Wesentlichen C-förmige Struktur gebildet, bei der die Basis 1 unter ein Sitzmöbel geschoben werden kann, und die Ablage 3 oberhalb des Sitzmöbels angeordnet ist.

Darüber hinaus ist bei der vorliegenden Ausführungsform eine weitere C-Form dadurch gegeben, dass der Hauptfuß 4 seitlich, und insbesondere seitlich des Fußraums 2, angeordnet ist. Die Basis 1 und die Ablage 3 stehen oberhalb und unterhalb des Fußraums 2 von dem Hauptfuß 4 in dieselbe Richtung ab. Durch diese C-Form kann das Computermöbel ein Sitzmöbel seitlich umgreifen. Die gegebenenfalls vorgesehenen Hilfsfüße 13 könnten bei dieser Stellung, in der ein Sitzmöbel umgriffen wird, weggeklappt werden.

Ferner umfasst der Hauptfuß 4 eine Verstellmöglichkeit, durch die die Länge des Hauptfußes 4 angepasst werden kann. Beispielsweise kann der Hauptfuß 4 teleskopartig ausgebildet sein, wobei die zwei gegenüber einander teleskopartig ausfahrbaren Teile des Hauptfußes 4 über ein Verbindungsmittel starr miteinander verbunden werden können, sodass die Länge gewählt und fixiert werden kann.

Bevorzugt sind auf der Ablage 3 spezielle Halterungen, beispielsweise für ein Getränkebehältnis, eine Tastatur, eine Computermaus oder für andere Geräte vorgesehen.

Gegebenenfalls sind an der Basis 1 spezielle Anbauten, beispielsweise für Pedale, vorgesehen.

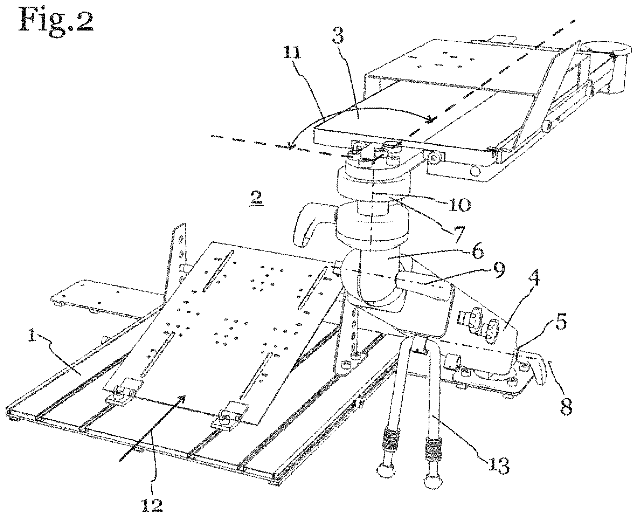

Fig. 2 zeigt dasselbe Computermöbel wie Fig. 1, wobei sich das Computermöbel in Fig. 2 in einer Stellung befindet, in der die Ablage 3 gegenüber der Position der Fig. 1 um etwa 90° von der Bedienperson weggeschwenkt ist. Diese Verschwenkung wird durch das Schwenkgelenk 7 ermöglicht. In dieser Stellung ist die Ablage 3 oberhalb des Hauptfußes 4 angeordnet und der Fußraum 2 ist nach oben geöffnet.

Gemäß einer weiteren möglichen Stellung des Computermöbels kann der Hauptfuß 4 im Wesentlichen vertikal angeordnet sein, sodass die Ablage 3 oberhalb der Basis 1 angeordnet ist, und das Computermöbel beispielsweise als Stehpult oder Rednerpult ausgebildet ist. Auch in dieser Stellung ist der Schwerpunkt des Computermöbels bevorzugt im Bereich der Basis 1 angeordnet. Etwaige Aufbauten für Fußpedale können in dieser Stellung abgenommen oder derart in ihrer Stellung verändert werden, dass die Person auf einem Teil der Basis 1 stehen kann. Insbesondere kann die Basis 1 für diese Ausführungsform flach bzw. plattenförmig ausgeführt sein. Alleine durch das Verschwenken des Hauptfußes 4 von einer geneigten Stellung in eine aufrechte Stellung wird die Ablage 3 in eine höher liegende Lage bewegt. Über die Längenverstellbarkeit des Hauptfußes 4 kann die Höhe der Ablage 3 weiter angepasst werden. Insbesondere kann dadurch eine Anpassung an die Größe der Person erfolgen.

Gemäß einer weiteren, nicht dargestellten, Ausführungsform kann die Basis 1 ein Gestänge umfassen, das zur seitlichen Abstützung der Basis 1 und zur Vergrößerung der Aufstandsfläche dient. Insbesondere können eine oder mehrere Stangen vorgesehen sein, die ausfahrbar von der Basis 1 abstehen, um die Standfläche zu vergrößern.

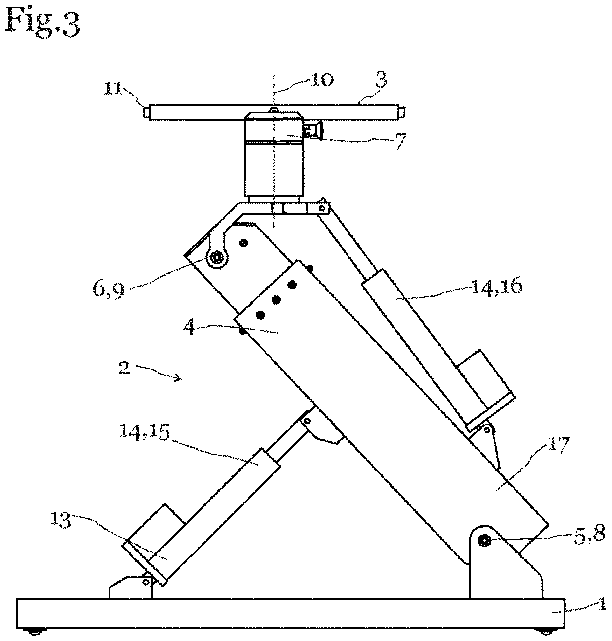

Fig. 3 zeigt eine weitere Ausführungsform eines Computermöbels, wobei die mit Bezugszeichen versehenen Komponenten den Komponenten der Figuren 1 und 2 entsprechen oder mit diesen im Wesentlichen wirkungsgleich sind.

Zusätzlich zu den bereits in Figur 1 und 2 beschriebenen Komponenten umfasst die Ausführungsform der Fig. 3 ein Antriebssystem 14, das zur Bewegung der beweglichen Komponenten des Computermöbels eingerichtet ist. So ist die Ablage 3 über mehrere Schwenkgelenke 5, 6, 7 gegenüber dem Untergrund und insbesondere gegenüber der Bedienperson beweglich und in einer gewünschten Position feststellbar angeordnet. Durch das Antriebssystem 14 kann diese Verstellung und Fixierung durch Fremdkraft und insbesondere automatisch oder automatisiert erfolgen. Das Antriebssystem 14 kann beispielsweise Antriebe, wie Drehantriebe oder Linearantriebe, umfassen, durch die ein Antrieb entlang der gegebenen Freiheitsgrade oder um die gegebenen Freiheitsgrade erfolgen kann.

In der vorliegenden Ausführungsform ist ein erster Linearantrieb 15 vorgesehen. Dieser erste Linearantrieb 15 greift einerseits an der Basis 1 und andererseits an dem Hauptfuß 4 an. Durch die vorliegende Konfiguration kann über den ersten Linearantrieb 15 der Hauptfuß 4 um das erste Gelenk 5 gegenüber der Basis 1 verschwenkt werden.

Ferner umfasst die folgende Ausführungsform auch einen zweiten Linearantrieb 16. Dieser zweite Linearantrieb 16 greift mit einer Seite an dem Hauptfuß 4 an. Mit seiner anderen Seite greift der zweite Linearantrieb 16 - entfernt von dem zweiten Gelenk 6 - an einem Element an, über das eine Verschwenkung der Ablage 3 und bei der vorliegenden Konfiguration auch des Schwenkgelenks 7 ermöglicht ist.

In der vorliegenden Ausführungsform ist auch noch ein dritter Linearantrieb 17 vorgesehen, der beispielsweise innerhalb des Hauptfußes 4 angeordnet ist und eine Längenverstellung des Hauptfußes 4 bewirken kann.

Durch das Antriebssystem 14 und insbesondere durch die drei Linearantriebe 15, 16 und 17 ist somit eine Verschwenkung um das erste Gelenk 5 und um das zweite Gelenk 6 sowie eine Längenverstellung des Hauptfußes 4 ermöglicht.

Bevorzugt umfasst das Antriebssystem 14 eine Steuerungseinrichtung, die beispielsweise derart ausgestaltet ist, dass die Ablage 3 bei einer Verstellung der Komponenten des Computermöbels in einer vordefinierten Stellung, insbesondere waagrecht, gehalten wird. Diese Steuerung kann dem Stand der Technik entsprechend ausgebildet sein.

Die Linearantriebe 15, 16, 17 können beispielsweise als Gewindestangenantriebe, Kugelgewindeantriebe oder Rollengewindeantriebe ausgebildet sein.

Das Antriebssystem 14 und insbesondere dessen Linearantriebe 15, 16, 17 können als Teil des Hauptfußes 4 angesehen werden.

## Patentansprüche

1. Computermöbel zur verstellbaren Positionierung mindestens eines Computerperipheriegeräts, wie insbesondere einer Tastatur, einer Computermaus, einem Fußpedal, einem Joystick, einem Lenkrad und/oder einem Bildschirm, wobei das Computermöbel selbststehend ausgebildet ist, umfassend:
- eine Basis (1), die zur Abstützung des Computermöbels am Boden eingerichtet ist,
- eine Ablage (3) zur Platzierung oder Halterung des Computerperipheriegeräts,
- einen Hauptfuß (4), wobei der Hauptfuß (4) über ein erstes Gelenk (5) neigbar und in einer wählbaren Neigstellung fixierbar mit der Basis (1) verbunden oder gekoppelt ist,
- wobei das Computermöbel einen Fußraum (2) aufweist, der von oben durch die Ablage (3), von unten durch die Basis (1) und einseitig von dem Hauptfuß (4) begrenzt ist,
- wobei die Ablage (3) über ein zweites Gelenk (6) neigbar und in einer wählbaren Neigstellung fixierbar mit dem Hauptfuß (4) verbunden oder gekoppelt ist, wobei sich der Hauptfuß (4) von der Basis (1) einseitig und seitlich neben dem Fußraum (2) bis zu der Ablage (3) erstreckt, und wobei ein Schwenkgelenk (7) zur horizontalen Verschwenkung der Ablage (3) vorgesehen ist, wobei das Schwenkgelenk (7) zwischen der Ablage (3) und dem zweiten Gelenk (6) vorgesehen ist,
**dadurch gekennzeichnet, dass** an einem auskragenden Ende der Ablage (3) mindestens ein Hilfsfuß (13) vorgesehen ist, und/oder dass mindestens ein am Hauptfuß (4) angreifender Hilfsfuß (13) vorgesehen ist, der zur zusätzlichen Abstützung des Hauptfußes (4) am Boden eingerichtet ist.

2. Computermöbel nach Anspruch 1, **dadurch gekennzeichnet,**
- **dass** das erste Gelenk (5) eine im Wesentlichen horizontal verlaufende erste Schwenkachse (8) zur Veränderung der Neigung des Hauptfußes (4) gegenüber der Basis (1) aufweist,
- und **dass** das zweite Gelenk (6) eine im Wesentlichen horizontal verlaufende zweite Schwenkachse (9) zur Veränderung der Neigung der Ablage (3) gegenüber dem Hauptfuß (4) aufweist.

3. Computermöbel nach Anspruch 2, **dadurch gekennzeichnet, dass** die erste Schwenkachse (8) und die zweite Schwenkachse (9) im Wesentlichen parallel zueinander verlaufen.

4. Computermöbel nach einem der Ansprüche 1 bis 3, **dadurch gekennzeichnet, dass** der Hauptfuß (4) in seiner Länge veränderbar ausgestaltet ist.

5. Computermöbel nach einem der Ansprüche 1 bis 4, **dadurch gekennzeichnet, dass** die Ablage (3) ausschließlich über den Hauptfuß (4) abgestützt ist und einseitig frei auskragt, wenn an einem auskragenden Ende der Ablage (3) kein Hilfsfuß vorgesehen ist.

6. Computermöbel nach einem der Ansprüche 1 bis 5, **dadurch gekennzeichnet, dass** die Basis (1), der Hauptfuß (4) und die Ablage (3) in ihrer Betriebsstellung C-förmig angeordnet sind.

7. Computermöbel nach einem der Ansprüche 1 bis 6, **dadurch gekennzeichnet, dass** der Fußraum (2) in waagrechter Richtung nur von dem Hauptfuß (4) begrenzt ist.

8. Computermöbel nach einem der Ansprüche 1 bis 7, **dadurch gekennzeichnet, dass** ein Antriebssystem (14) zum Antrieb, vorzugsweise zum elektrischen Antrieb, der beweglichen Komponenten, insbesondere des Hauptfußes (4) und der Ablage (3), vorgesehen ist.

## Claims

1. A piece of computer furniture for adjustably positioning at least one computer peripheral device, such as in particular a keyboard, a computer mouse, a foot pedal, a joystick, a steering wheel and/or a screen wherein the piece of computer furniture is designed to be self-standing, comprising:
- a base (1) configured to support the piece of computer furniture on the floor,
- a shelf (3) for placing or holding the computer peripheral device,
- a main stand (4), wherein the main stand (4) is connected or coupled to the base (1) via a first joint (5) so as to be inclinable and fixable in a selectable inclination position,
- wherein the piece of computer furniture has a legroom (2), which is limited from above by the shelf (3), from below by the base (1) and on one side by the main stand (4),
- wherein the shelf (3) is connected or coupled to the main stand (4) via a second joint (6) so as to be inclinable and fixable in a selectable inclination position, wherein the main stand (4) extends from the base (1) on one side and extends laterally adjacent to the legroom (2) up to the shelf (3), and wherein a swivel joint (7) is provided for horizontally pivoting the shelf (3), wherein the swivel joint (7) is provided between the shelf (3) and the second joint (6),
**characterized in that** at least one auxiliary stand (13) is provided at a protruding end of the shelf (3), and/or **in that** at least one auxiliary stand (13) attached to the main stand (4) is provided, which is configured for additional support of the main stand (4) on the floor.

2. The piece of computer furniture according to claim 1, **characterized**
- **in that** the first joint (5) has a substantially horizontally extending first swivel axis (8) for changing the inclination of the main stand (4) relative to the base (1),
- and **in that** the second joint (6) has a substantially horizontally extending second swivel axis (9) for changing the inclination of the shelf (3) relative to the main stand (4).

3. The piece of computer furniture according to claim 2, **characterized in that** the first swivel axis (8) and the second swivel axis (9) extend substantially parallel to one another.

4. The piece of computer furniture according to one of claims 1 to 3, **characterized in that** the main stand (4) is designed to be variable in its length.

5. The piece of computer furniture according to one of claims 1 to 4, **characterized in that** the shelf (3) is supported exclusively by the main stand (4) and protrudes freely on one side, when no auxiliary stand is provided at a protruding end of the shelf (3).

6. The piece of computer furniture according to one of claims 1 to 5, **characterized in that** the base (1), the main stand (4) and the shelf (3) are arranged in a C-shape in their operating position.

7. The piece of computer furniture according to one of claims 1 to 6, **characterized in that** the legroom (2) is limited in a horizontal direction only by the main stand (4).

8. The piece of computer furniture according to one of claims 1 to 7, **characterized in that** a drive system (14) is provided for driving, preferably electrically driving, the movable components, in particular the main stand (4) and the shelf (3).

## Revendications

1. Meuble d'ordinateur permettant de positionner de manière réglable au moins un périphérique d'ordinateur, comme en particulier un clavier, une souris d'ordinateur, une pédale, un joystick, un volant et/ou un écran, le meuble d'ordinateur étant réalisé de manière autoportante, comprenant :
- une base (1) qui est conçue pour supporter le meuble d'ordinateur sur le sol,
- une tablette (3) permettant de placer ou de supporter le périphérique d'ordinateur,
- un piétement principal (4), le piétement principal (4) étant inclinable à l'aide d'une première articulation (5) et raccordé ou couplé fixable avec la base (1) dans une position inclinée au choix ,
- le meuble d'ordinateur présentant un espace pour les pieds (2), qui est délimité par le haut par la tablette (3), par le bas par la base (1) et d'un côté par le piétement principal (4),
- la tablette (3) étant inclinable à l'aide d'une seconde articulation (6) et raccordée ou couplée fixable avec le piétement principal (4) dans une position inclinée au choix, le piétement principal (4) s'étendant depuis la base (1) d'un côté et latéralement à côté de l'espace pour les pieds (2) jusqu'à la tablette (3), et une articulation pivotante (7) étant prévue pour permettre à la tablette (3) de pivoter horizontalement, l'articulation pivotante (7) étant prévue entre la tablette (3) et la seconde articulation (6),
**caractérisé en ce qu'**au moins un piétement auxiliaire (13) est prévu à une extrémité en porte-à-faux de la tablette (3) et/ou **en ce qu'**au moins un piétement auxiliaire (13) agissant sur le piétement principal (4) est prévu, lequel est aménagé pour fournir un appui supplémentaire au piétement principal (4) sur le sol.

2. Meuble d'ordinateur selon la revendication 1, **caractérisé**
- **en ce que** la première articulation (5) présente un premier axe de pivotement (8) s'étendant essentiellement horizontalement pour modifier l'inclinaison du piétement principal (4) par rapport à la base (1),
- et **en ce que** la seconde articulation (6) présente un deuxième axe de pivotement (9) s'étendant essentiellement horizontalement pour modifier l'inclinaison de la tablette (3) par rapport au piétement principal (4).

3. Meuble d'ordinateur selon la revendication 2, **caractérisé en ce que** le premier axe de pivotement (8) et le deuxième axe de pivotement (9) sont sensiblement parallèles entre eux.

4. Meuble d'ordinateur selon l'une des revendications 1 à 3, **caractérisé en ce que** le piétement principal (4) est conçu de manière modifiable en longueur.

5. Meuble d'ordinateur selon l'une des revendications 1 à 4, **caractérisé en ce que** la tablette (3) est soutenue exclusivement par le piétement principal (4) et est en porte-à-faux libre d'un côté lorsqu'aucun piétement auxiliaire n'est prévu à une extrémité en porte-à-faux de la tablette (3).

6. Meuble d'ordinateur selon l'une des revendications 1 à 5, **caractérisé en ce que** la base (1), le piétement principal (4) et la tablette (3) sont disposés en forme de C dans leur position de fonctionnement.

7. Meuble d'ordinateur selon l'une des revendications 1 à 6, **caractérisé en ce que** l'espace pour les pieds (2) n'est délimité dans une direction horizontale que par le piétement principal (4).

8. Meuble d'ordinateur selon l'une des revendications 1 à 7, **caractérisé en ce qu'**un système d'entraînement (14) est prévu pour entraîner, de préférence électriquement, les composants mobiles, notamment le piétement principal (4) et la tablette (3).
